# FASCICULE DE BREVET EUROPEEN

(11) **EP 3 244 501 B1**
(45) Date de publication et mention de la délivrance du brevet: **27.05.2020**
(21) Numéro de dépôt: 16382580.5
(22) Date de dépôt: 30.11.2016
(51) Int. Cl.: H02G 3/04, H02G 3/38

(54) **CANAL POUR LA PROTECTION ET L'ISOLATION DES CÂBLES D'ALIMENTATIONS ÉLECTRIQUES**
KANAL FÜR DEN SCHUTZ UND DIE ISOLATION VON STROMKABELN
CHANNEL FOR PROTECTING AND INSULATING ELECTRICAL POWER SUPPLY CABLES

(30) Priorité: 13.05.2016 ES 201630617 U
(43) Date de publication de la demande: 15.11.2017
(73) Titulaire: Zublezu Llona, Maria Iciar, 48113 Gamiz-Fika (Bizkaia) (ES)
(72) Inventeur: Zublezu Llona, Maria Iciar, 48113 Gamiz-Fika (Bizkaia) (ES)
(74) Mandataire: Urizar Barandiaran, Miguel Angel

(56) Documents cités:
- EP-A2- 0 330 082
- ES-U- 1 080 229
- FR-A1- 2 747 852
- US-A- 2 087 640
- US-A1- 2008 041 608
- Cabling Fiberopting Blogspot: "Cabling Pathways", , 17 August 2011 (2011-08-17), XP055662678, Retrieved from the Internet: URL:http://cablingfiberoptic.blogspot.com/ 2011/08/cabling-pathways.html [retrieved on 2020-01-28]

## Description

L'objet de l'invention fait référence à un canal pour la protection et l'isolation des câbles d'alimentation électriques, particulièrement un canal pour la protection de câbles avec une gaine en caoutchouc, qui, installé/réalisé dans des installations de génie civil, facilite la disposition de câbles dans les endroits où ils doivent être protégés, les câbles à protéger étant suspendus et séparés, et même physiquement isolés des parois de la tranchée où ils sont logés.

Dans l'état actuel de la technique, des canaux pour la protection de câbles d'alimentations électriques sont connus. Dans, par exemple et entre autres, les brevets ES1033862 et ES1080229 deux d'entre eux sont décrits. Le document EP 0 330 082 A2 divulgue une gaine qui protège le câble à l'intérieur du conduit; la gaine du document EP0330082A2 n'est pas suspendue.

Le document XP055662678 divulgue que les câbles sont maintenus en suspension grâce au support déformable.

Le demandeur a pu constater que les canaux qui constituent les solutions précédentes connues présentent des limitations, particulièrement quant au système d'isolation des câbles par rapport aux installations de génie civil où ils sont logés.

Dans le canal de protection, conformément à l'invention, ces limitations sont surmontées : les câbles à protéger sont suspendus et séparés (voire même physiquement éloignés) des parois et de la base de la tranchée où ils sont logés, ils sont par conséquent totalement isolés tant de l'humidité que des pressions ou poussées provoquées par des éléments de l'environnement pouvant être à l'origine d'accidents ou de la détérioration des câbles mêmes.

Le canal pour la protection et l'isolation des câbles d'alimentations électriques objet de l'invention, en partant d'installation de génie civil et d'environnement connus (un tranchée, ouvert sur l'axe longitudinal dans l'installation de génie civil où sont disposés les câbles, et, au moins, une gaine en caoutchouc montée de manière fixe et coplanaire en couvrant ladite tranchée et avec la possibilité d'accéder, au moins, à l'un de ses niveaux intérieurs grâce à sa propre flexibilité) se caractérise par le fait qu'il dispose de:
- un support déformable, situé dans la zone la plus haute de la tranchée et éloigné tant de ses parois que de sa base. Sur ce support sont disposés les câbles à protéger, lesquels sont appuyés et suspendus dans celui-ci sans entrer directement en contact avec l'infrastructure;
- deux montants associés au dit support déformable et disposés sur deux profilés en angle;
- des moyens pour fixer le support déformable sur les montants et pour fixer cet ensemble aux dits profilés en angle en formant avec ceux-ci un bloc occulté sous la gaine en caoutchouc.

Il se caractérise aussi par le fait que les deux bords opposés du support déformable sont enroués, chacun autour d'un des montants ; et les moyens utilisés pour soutenir cet ensemble aux profilés en angle correspondants sont des vis ou des rivets insérés dans des jeux d'orifices réalisés et alignés par groupes sur les bords du support déformable, dans les montants correspondants et dans les profilés en angle respectifs.

Avec le canal structuré selon l'invention, les câbles à protéger s'appuient sur le support déformable et sont suspendus : sans contact avec l'installation de génie civil et sans même se rapprocher des parois ni de la base de la tranchée où ils sont situés, par conséquent, aucune finition ni revêtement ne sont nécessaires sur ces parois et/ou base.

D'autres configurations et avantages de l'invention peuvent être déduits à partir de la description suivante, et des revendications dépendantes.

Dans l'objet de mieux comprendre l'objet de l'invention, une forme préférentielle de réalisation, pouvant présenter des changements accessoires ne dénaturant pas son fondement, est représentée sur les figures jointes. Dans ce cas:

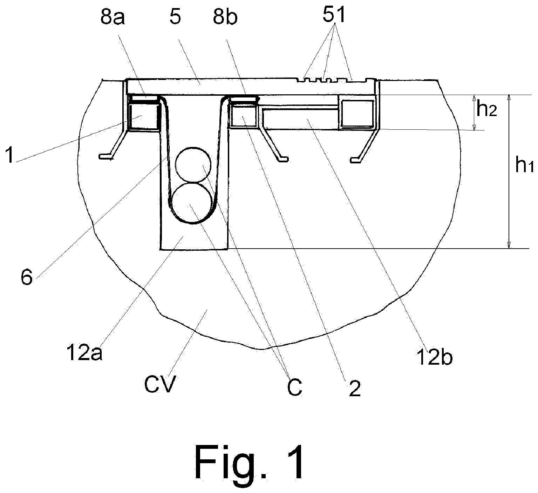

La figure 1 représente une coupe générale levée d'un canal pour la protection et l'isolation des câbles d'alimentations électriques, conformément à l'invention, avec tous ses composants et particularités en disposition opérationnelle.
La figure 2 représente une vue générale éclatée correspondante à la figure précédente, avec tous ses éléments principaux et les composants en disposition de montage. La tranchée a été omise, ainsi que toute l'installation de génie civil (CV) pour plus de clarté.

Sur celles-ci sont notées les références et les particularités suivantes:
1, 2.- Profilés en angle.
5.- Gaine en caoutchouc
6.- Support déformable.
8a, 8b.- Montants.
9a, 9b.- jeux d'orifices
12a, 12b.- Zones de la tranchée, de différentes hauteurs
C.- Câbles à protéger
CV.- Installation de génie civil.
h₁, h₂.-Hauteurs des deux zones (12a), (12b) de la tranchée.

Ci-dessous est décrit un exemple de réalisation pratique, non limitatif, de la présente invention. D'autres modes de réalisation dans lesquels sont introduits des changements accessoires ne dénaturant pas son fondement ne sont absolument pas écartés, au contraire, la présente invention inclut aussi toutes ses variantes.

La présente invention étudie un canal pour la protection et l'isolation de câbles (C), du type de ceux structurés dans une tranchée avec deux zones (12a), (12b) de hauteurs (h₁), (h₂).

Cette tranchée, ouverte sur son axe longitudinal dans une installation de génie civil (CV) comporte, au moins, une gaine en caoutchouc (5) montée de manière fixe et coplanaire en couvrant ladite tranchée avec la possibilité d'accéder, au moins, à sa zone (12a) de hauteur supérieure grâce à la propre flexibilité de la gaine en caoutchouc (5).

Dans la zone où la hauteur est supérieure (12a) sont disposés les câbles (C) à protéger et dans la zone où la hauteur est inférieure (12b) sont disposés des profilés en angle (1), (2) qui escortent au niveau supérieur la zone (12a) de la tranchée.

Selon la réalisation représentée, les profilés en angle (1), (2) ont une configuration tubulaire fermée et chacun dispose, au moins, d'une face supérieure plate. Ses faces supérieures plates sont coplanaires ou sensiblement coplanaires alignées sur un plan horizontal ; de manière à constituer un appui pour la gaine en caoutchouc (5) qui atteint et recouvre les deux zones (12a), (12b) de la tranchée et son environnement, en occultant cet ensemble.

La gaine en caoutchouc (5) comporte des stries longitudinales (51) qui aident à sa flexibilité.

Conformément à l'invention, l'on dispose un support déformable (6) logé dans la zone (12a) la plus haute de la tranchée, sans contact ni avec sa base ni avec ses parois latérales. Ce support déformable (6) est suspendu à deux montants (8a), (8b), qui, à leur tour, reposent sur les dits profilés en angle (1), (2) qui délimite sur la zone supérieure deux côtés opposés de la zone (12a) la plus haute de la tranchée.

Ces deux montants (8a), (8b), le support déformable (6) suspendus sur ceux-ci, et les profilés en angle (1), (2) sur lesquels reposent les montants (8a), (8b), sont fixés entre eux avec des moyens appropriés pour former un ensemble compact ; cet ensemble étant occulté sous la gaine en caoutchouc (5).

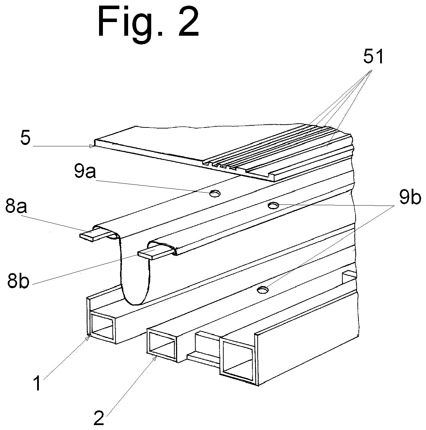

Selon l'exemple de réalisation représenté sur la figure 2, deux bords opposés du support déformable (6) sont enroulés autour des montants (8a), (8b) respectifs. Les moyens utilisés pour fixer entre eux le support déformable (6), les montants (8a), (8b) et les profilés en angle (1), (2) respectifs sont des vis ou des rivets insérés dans des jeux d'orifices (9a), (9b) réalisés dans les bords du support déformable (6), dans les montants (8a), (8b) et dans les profilés en angle (1), (2) et confrontés par groupe. Voir figure 2

Avec cette structuration, les câbles (C) à protéger s'appuient sur le support déformable (6) et suspendus ; sans contact avec l'installation de génie civil (CV) et sans même se rapprocher des parois ni de la base de la tranchée où ils sont situés.

Les matériaux, dimensions, proportions, et, en général, tous les autres détails accessoires ou secondaires n'altérant, ne changeant ni ne modifiant pas le fondement proposé pourront être variables.

Les termes dans lesquels est rédigé ce mémoire sont certains et reflètent fidèlement l'objet décrit, et doivent être entendus dans leur sens le plus ample, et ceci en aucun cas de manière limitative.

## Revendications

1. Canal pour la protection et l'isolement des câbles d'alimentations électriques comprenant des profilés en angle (1), (2) et au moins une gaine en caoutchouc (5) structuré dans une tranchée ouverte sur son axe longitudinal dans une installation de génie civil (CV) et avec deux zones, une zone de plus grande hauteur (12a) et une zone de hauteur inférieure (12b) de hauteurs (h₁), (h₂) différentes, où l'on dispose, respectivement, les câbles (C) à protéger et les profilés en angle (1), (2) situés sur les côtés supérieur opposé de la zone (12a) de plus grande hauteur; les profilés en angle ont une configuration tubulaire fermée et chacun dispose, au moins, d'une face supérieure plate; et, la gaine en caoutchouc (5) montée sur tout l'ensemble avec la possibilité d'accéder, au moins, à la zone (12a) la plus haute de la tranchée grâce à qui comporte des stries longitudinales (51) qui aident à su flexibilité; **caractérisé par le fait qu'**il dispose de:
a) un support déformable (6), avec deux bords opposés, logé dans la zone (12a) de hauteur (h1) supérieure et éloigné tant de ses parois que de sa base, dans lequel sont disposés les câbles (C) à protéger, les câbles (C) s'appuyant et étant suspendus au support déformable (6) sans contact direct avec l'installation de génie civil (CV) ;
b) deux montants (8a), (8b) associés au dit support déformable (6) et disposés respectivement sur les profilés en angle (1) (2) vers les côtés supérieur et opposé de la zone (12a) ; de hauteur supérieure
c) des moyens pour soutenir le support déformable (6) sur les montants (8a), (8b) et pour fixer cet ensemble aux dits profilés en angle (1), (2) en formant avec ceux-ci un bloc occulté sous la gaine en caoutchouc (5).

2. Canal pour la protection et l'isolement des câbles d'alimentations électriques, selon la revendication 1, **caractérisé par le fait que** les deux bords opposés du support déformable (6) sont enroulés autour des montants (8a), (8b), respectifs et les moyens employés pour soutenir cet ensemble aux profilés en angle (1), (2) respectifs sont des vis ou des rivets insérés dans des jeux d'orifices (9a), (9b) réalisés et alignés par groupes sur les bords du support déformable (6), dans les montants (8a), (8b) respectifs et dans les profilés en angle (1), (2) respectifs.

## Patentansprüche

1. Kanal für den Schutz und die Isolation von Stromkabeln mit Winkelprofil (1), (2) und mindestens einer strukturierten Gummihülle (5) über dem offenen Kanal in Längsrichtung in einer Tiefbauanlage (CV) und mit zwei Bereichen, einem Bereich mit größerer Höhe (12a) und einem weiteren Bereich mit geringerer Höhe (12b), mit unterschiedlichen Höhen (h1) (h2), in denen jeweils die Kabel (C), die geschützt werden müssen, und die Winkelprofile (1), (2) die an der Oberseite gegenüber dem Bereich (12a) mit größerer Höhe liegen, eingezogen sind; die Winkelprofile haben eine geschlossene röhrenförmige Konfiguration und jedes verfügt über mindestens eine flache Oberseite; und die Gummihülle (5), die über der gesamten Einheit montiert ist, mit der Möglichkeit des Zugriffs auf mindestens den Bereich (12a) der größeren Höhe des Kanals, da er Längsrillen (51) umfasst, die zu seiner Flexibilität beitragen; und über Folgendes verfügt:
a) eine verformbare Halterung (6), mit zwei gegenüberliegenden Rändern, im Bereich (12a) der größeren Höhe (h1) und distal sowohl von dessen Seiten als auch dessen Unterseite gelegen, in denen sich die zu schützenden Kabel (C) befinden, die Kabel (C) liegen und hängen an der verformbaren Halterung (6) ohne direkten Kontakt mit der Tiefbauanlage (CV);
b) zwei Stützen (8a), (8b), die mit der besagten verformbaren Halterung (6) verbunden und jeweils über den Winkelprofilen (1) (2) an den oberen Seiten und gegenüberliegenden Seiten des Bereichs (12a) mit der größeren Höhe angebracht sind
c) Hilfsmittel, um die verformbare Halterung (6) auf den Stützen (8a), (8b) und die besagte Einheit an den Winkelprofilen (1), (2) zu befestigen, so dass damit ein verdeckter Block mit der Gummihülle (5) gebildet wird.

2. Kanal für den Schutz und die Isolation von Stromkabeln nach Anspruch 1, **gekennzeichnet dadurch, dass** die beiden gegenüberliegenden Ränder der verformbaren Halterung (6) jeweils um die Stützen (8a), (8b) gerollt sind, und dass die verwendeten Hilfsmittel für die Befestigung der Einheit an den jeweiligen Winkelprofilen (1), (2) Schrauben oder Nieten sind, die in eine Einheit von Öffnungen (9a), (9b) eingesetzt sind, die in Reihe nach Gruppen an den Rändern der verformbaren Halterung (6), an den jeweiligen Stützen (8a), (8b) und an den jeweiligen Winkelprofilen (1), (2) eingebracht wurden.

## Claims

1. Channel for protecting and insulating electrical power supply cables with angle profile (1), (2) and at least one rubber sleeve (5) structured on open trench on its longitudinal axis in a civil engineering (CV) installation and with two zones, a zone of greater height (12a) and another zone of lower height (12b), with different heights (h1) (h2) at which, respectively, the cables (C) will be placed, that must be protected and the angle profiles (1), (2) located on the upper side opposite the zone (12a) of greatest height; the angle profiles have a closed tubular configuration and each one has at least one flat upper face; and the rubber sleeve (5) mounted on the entire set with the possibility of accessing, at least the zone (12a) of greatest height of the trench, it includes longitudinal grooves (51) that contribute to its flexibility; having:
a) a deformable support (6), with two opposite edges, located in the zone (12a) of greatest height (h1) and distant both from its sides and from its base, where the cables (C) that must be protected are located; the cables (C) are supported and hang from the deformable support (6) without direct contact with the civil engineering (CV) installation;
b) two stanchions (8a), (8b) associated with said deformable support (6) and arranged respectively on the angle profiles (1) (2) toward the upper sides and opposite the zone (12a); of greatest height.
c) means for sustaining the deformable support (6) on the stanchions (8a), (8b) and for fastening said set to the angle profiles (1), (2) forming with them a hidden block with the rubber sleeve (5).

2. Channel for protecting and insulating electrical power supply cables according to claim 1, **characterized in that** the two edges opposite the deformable support (6) are rolled around the stanchions (8a), (8b), respectively, and the means used to sustain said set to the angle profiles (1), (2) respectively, are screws or rivets inserted in a set of orifices (9a), (9b) arranged in a row by groups on the edges of the deformable support (6), on the stanchions (8a), (8b) respectively, and on the angle profiles (1), (2) respectively.
